# EUROPÄISCHE PATENTSCHRIFT

(11) **EP 1 238 910 B1**
(45) Veröffentlichungstag und Bekanntmachung des Hinweises auf die Patenterteilung: **03.11.2004**
(21) Anmeldenummer: 02004470.7
(22) Anmeldetag: 27.02.2002
(51) Int. Cl.: B65B 19/34, B65G 47/51, B65G 47/31

(54) **Vorrichtung zum Verpacken von länglichen Gegenständen**
Apparatus for packaging elongate objects
Dispositif pour emballer des objets allongés

(30) Priorität: 06.03.2001 DE 10110787
(43) Veröffentlichungstag der Anmeldung: 11.09.2002
(73) Patentinhaber: Focke & Co. (GmbH & Co.), 27283 Verden (DE)
(72) Erfinder: Focke, Heinz, 27283 Verden (DE); Morgenstern, Horst, 04179 Leipzig (DE)
(74) Vertreter: Bolte, Erich, Dipl.-Ing.

(56) Entgegenhaltungen:
- CH-A- 688 090
- DE-A- 19 521 923
- DE-A- 19 909 608
- US-A- 3 722 656
- US-A- 4 386 490

## Beschreibung

Die Erfindung betrifft eine Vorrichtung zum Handhaben von länglichen, insbesondere zylindrischen Gegenständen, vorzugsweise zur Bildung von Gruppen aus Gegenständen als Inhalt einer zu füllenden Packung, mit einem Gruppenförderer, der Taschen zur Aufnahme der Gruppen aufweist, wobei die Gegenstände durch einen Zuförderer einer Füllstation zuführbar sind, in deren Bereich die Taschen des Gruppenförderers je zur Aufnahme einer Gruppe entsprechenden Anzahl von Gegenständen bereitgehalten sind, und wobei die Taschen während der Einführung der Gegenstände in die Taschen kontinuierlich weiterbewegbar sind.

Bei den zu handhabenden länglichen, insbesondere zylindrischen Gegenständen handelt es sich vorzugsweise um (von einer Umhüllung umgebene) Tampons, also Zellstoffprodukte. Es können aber auch andere, ähnlich ausgebildete Gegenstände, wie z.B. Zigaretten, Zigarren etc. betroffen sein.

Es besteht das grundsätzliche Problem, die aus einer Fertigungsmaschine kommenden Gegenstände zu ordnen und Gruppen entsprechend dem Inhalt einer Packung zu bilden. Diese Gruppen werden sodann zur Einführung in eine vorbereitete Packung transportiert.

Aus der US 4 386 491 ist eine Vorrichtung für die Portionierung von Würstchen bekannt. Diese werden in Taschen eines Förderers gruppenweise gesammelt und weitergefördert.

Der Erfindung liegt die Aufgabe zugrunde, die Handhabung der Gegenstände bis zur Übergabe an die zu befüllenden Packungen kontinuierlich zu gestalten. Dabei geht es auch um die Einhaltung bestimmter Fördergeschwindigkeiten und -abstände.

Zur Lösung der Aufgabe ist die erfindungsgemäße Vorrichtung durch folgende Merkmale gekennzeichnet:
a) der Gruppenförderer weist zwei mit unterschiedlichen Fördergeschwindigkeiten umlaufende, eigenständige Steilförderer, nämlich Endlosförderer auf, wobei der zweite Endlosförderer an den ersten Endlosförderer anschließt,
b) die Taschen sind lösbar mit dem ersten oder zweiten Endlosförderer verbunden,
c) in einer Übergabestation des Gruppenförderers sind die Taschen von dem ersten Endlosförderer lösbar und an den anschließenden zweiten Endlosförderer übertragbar.

Die (einzeln) ankommenden Gegenstände werden in queraxialer Richtung nacheinander in einen oben offenen Transportbehälter eines Gurtförderers eingefüllt, insbesondere in eine becherförmige Tasche eines Taschenförderers. Die Befüllung des Transportbehälters mit neben- und übereinanderliegenden Gegenständen wird entsprechend dem Inhalt einer Packung bemessen. Der Inhalt eines Transportbehälters wird durch quergerichtete Ausschubbewegung aus dem mindestens an einer Seite offenen Transportbehälter in die ebenfalls seitlich offene Packung oder in eine Tasche eines Zwischenförderers eingeschoben.

Eine Besonderheit besteht darin, dass die Gegenstände ausschließlich durch queraxiale (fortgesetzte) Förderbewegung von oben her in den offenen Transportbehälter eingeführt werden, sodass innerhalb dieses Transportbehälters durch einen gesteuerten Füllvorgang die Bildung der Gruppe erfolgt.

Eine Besonderheit sind Ausgestaltung und Arbeitsweise des Gruppenförderers, also eines Taschenförderers. Erfindungsgemäß werden die Transportbehälter bzw. Taschen entlang einer ersten Förderstrecke kontinuierlich mit verminderter Geschwindigkeit und insbesondere bei dicht aufeinanderfolgenden Transportbehältern bewegt und in einem zweiten Förderabschnitt mit größerer Fördergeschwindigkeit und einem (größeren) Abstand der Transportbehälter voneinander. Zu diesem Zweck sind die Transportbehälter lösbar mit einem Fördermittel, insbesondere einem Endlosgurt oder einer Endloskette, verbunden, wobei zwei mit unterschiedlichen Fördergeschwindigkeiten umlaufende Teilförderer die Transportbehälter während der ersten und zweiten Förderstrecke mit unterschiedlichen Fördergeschwindigkeiten mitnehmen.

Die einzeln und in Dichtlage aufeinanderfolgend ankommenden Gegenstände werden durch ein Sortierorgan entsprechend der erforderlichen Anzahl unter Aufrechterhaltung der Dichtfolge in den bereitstehenden Transportbehälter eingefördert, wobei dem Sortierorgan ein hinsichtlich des Aufnahmevermögens veränderlicher Durchlaufspeicher für die Gegenstände vorgeordnet ist, um eine Unterbrechung des Füllvorgangs bei der Zuführung eines nächsten, leeren Transportbehälters auszugleichen.

Weitere Besonderheiten und Details der Erfindung werden nachfolgend anhand der Zeichnungen näher erläutert. Es zeigt:
- Fig. 1: einen Ausschnitt der Vorrichtung in schematischer Seitenansicht,
- Fig. 2: ein Detail der Vorrichtung gemäß Fig. 1 in vergrößertem Maßstab, nämlich einen Durchlaufspeicher, ebenfalls in Seitenansicht,
- Fig. 3: die Einzelheit gemäß Fig. 2 in veränderter Relativstellung,

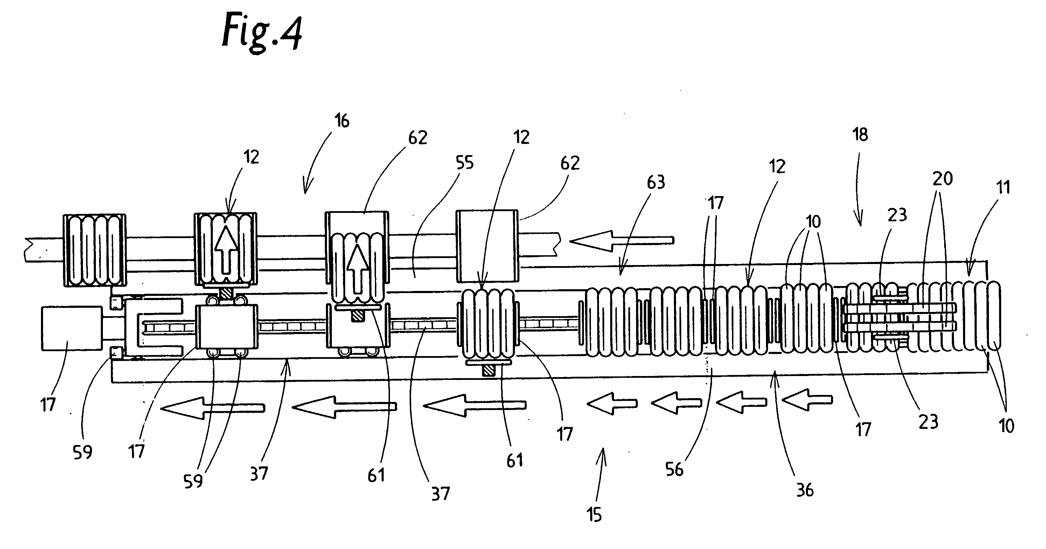

- Fig. 4: einen Teilbereich der Vorrichtung gemäß Fig. 1 in Draufsicht entsprechend Pfeil IV in Fig. 1,
- Fig. 5: einen Querschnitt durch einen Taschenförderer der Fig. 1 in Schnittebene V-V, bei vergrößertem Maßstab,
- Fig. 6: einen Querschnitt der Vorrichtung gemäß Fig. 1 in Schnittebene VI-VI, ebenfalls bei vergrößertem Maßstab,
- Fig. 7: eine Queransicht bzw. einen Vertikalschnitt in Schnittebene VII-VII der Fig. 5.

In den Zeichnungen ist die Handhabung von langgestreckten runden bzw. zylindrischen Gegenständen 10 gezeigt. Bei diesen handelt es sich bevorzugt um mit einer Außenumhüllung versehene Tampons. Es geht darum, aus den einzeln in einer Dichtreihe 11 ankommenden Gegenständen 10 Gruppen 12 zu bilden, die einer weiteren Handhabung zugeführt, nämlich insbesondere als kompletter Inhalt einer Packung in einen Packungsbehälter eingeschoben werden.

Die einzelnen Bereiche bzw. Stationen der Vorrichtung weisen einen Zuförderer 13 für die Gegenstände 10, einen Durchlaufspeicher 14, einen Gruppenförderer 15, nämlich Taschenförderer, und einen Zwischenförderer 16, ebenfalls ein Taschenförderer, auf. Von dem Zwischenförderer 16 werden die Gegenstände 10 den bereitgehaltenen Verpackungsbehältern zugeführt.

Eine wichtige Besonderheit der Vorrichtung ist der Gruppenförderer 15. Es handelt sich dabei um einen Endlosförderer mit einer Mehrzahl von Transportbehältem für je eine Gruppe 12, nämlich Taschen 17. Diese sind an der Oberseite sowie an zwei einander gegenüberliegenden Seiten offen. Die Tasche 17 hat demnach einen U-förmigen Querschnitt. Die Abmessung der Taschen 17 in Längsrichtung der aufgenommenen Gegenstände 10 ist geringer als deren Länge, so dass die Gegenstände 10 an beiden Seiten über die Taschen 17 hinwegragen.

Zu besonderer Weise erfolgt die Befüllung der Taschen 17 jeweils im Bereich einer Füllstation 18. Die Gegenstände 10 werden einzeln, nacheinander unter Fortsetzung der queraxialen Förderbewegung in eine Tasche 17 von oben her eingefüllt. Die Taschen 17 werden während des Füllvorgangs kontinuierlich weitertransportiert, allerdings mit verminderter Fördergeschwindigkeit. Während des Füllvorgangs bewegt sich demnach die Tasche 17 durch die Füllstation 18 unter Fortsetzung des Füllvorgangs, so dass die Tasche 17 mit einer kompletten Gruppe 12 befüllt ist, wenn sie aus dem Bereich der Füllstation 18 heraustritt.

Die Gegenstände 10 werden unter Aufrechterhaltung der Dichtreihe 11 der Füllstation 18 zugeführt. Oberhalb der jeweils zu befüllenden Tasche 17 befindet sich ein Sortierorgan, nämlich ein Rad bzw. eine Walze mit Mulden 19 für je einen Gegenstand 10. Es handelt sich dabei um ein Zählrad 20, welches zum einen die geordnete Zuführung der Gegenstände 10 zu der Tasche 17 gewährleistet und die Anzahl derselben ermittelt und danach den Füllvorgang steuert.

Der Füllstation 18 bzw. dem Zählrad 20 sind Hilfsorgane für eine geordnete Einführung der Gegenstände 10 in die Tasche 17 zugeordnet. Es handelt sich dabei um ein Führungssegment 21, welches das Zählrad 20 in einem unteren Teilbereich des Umfangs formschlüssig umgibt, so dass die von dem Zählrad 20 transportierten Gegenstände 10 unten auf dem Führungssegment 21 entlanggleiten. Das Führungssegment 21 erfasst etwa den Bereich eines Viertelkreises.

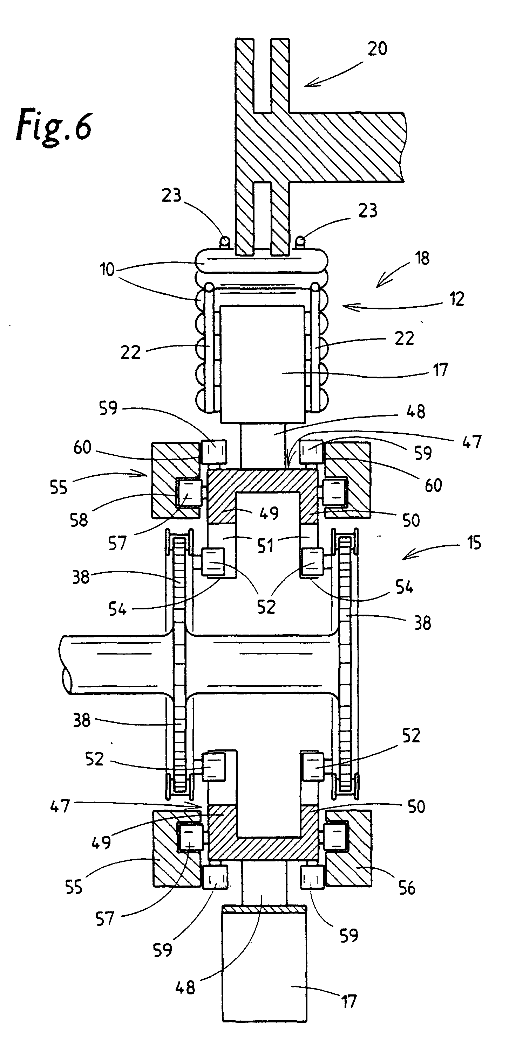

Hieran schließen (zwei) Leitstege 22 an, die schräg nach unten gerichtet sind und sich im Bereich der zu befüllenden Tasche 17 erstrecken, derart, dass die Gegenstände 10 auf den beiden im Abstand voneinander liegenden Leitstegen 22 bis zur Endlage in der Tasche 17 geführt werden. Die beiden Leitstege 22 erstrecken sich zu beiden Seiten der Tasche 17, jedoch im Bereich der Gegenstände 10 (Fig. 6). Während der Förderbewegung der Tasche 17 wandern die feststehenden Leitstege 22 von einer Seitenwand der Tasche 17 zur anderen, so dass die Tasche 17 entgegen der Förderrichtung auf Grund der Relativbewegung befüllt wird.

Oberhalb der Leitstege 22 ist mit entsprechendem Abstand ein Führungsbügel 23 angebracht, der ebenfalls aus zwei Stegen zu beiden Seiten des Zählrads 20 besteht und die ordnungsgemäße Bewegung der Gegenstände 10 nach oben sichert.

Der Füllstation 18 ist der Durchlaufspeicher 14 vorgeordnet. Dieser hat die Aufgabe, bei kontinuierlicher Zuförderung von Gegenständen, den Übergang des Füllvorgangs von einer Tasche 17 auf die nächste auszugleichen. Während dieses kurzen Zeitraums können Gegenstände 10 im Bereich der Füllstation 18 nicht abgenommen werden. Das Zählrad 20 wird kurzzeitig stillgesetzt. Die nachgeförderten Gegenstände 10 werden von dem Durchlaufspeicher 14 unter Veränderung der Kapazität desselben aufgenommen.

Der Durchlaufspeicher 14 besteht aus einem Endlosförderer mit Aufnahmen für die Gegenstände, nämlich aus einem Zahnriemen 24. Zwischen zwei benachbarten Zähnen ist jeweils ein Gegenstand 10 aufgenommen. Der endlose Zahnriemen 24 bildet aufgrund von Umlenkung ein Viereck. Ein erstes Umlenkrad 25 ist benachbart zum Zählrad 20 positioniert. Diesem Umlenkrad 25 ist ein Antriebsmotor, nämlich Servomotor, zugeordnet, der das Umlenkrad 25 und das benachbarte Zählrad 20 antreibt. Gegenüberliegend ist ein weiteres ortsfestes Umlenkrad 26 positioniert. Auch dieses wirkt zusammen mit einem zweiten, ortsfesten Zählrad 27. Umlenkrad 26 und Zählrad 27 werden ebenfalls von einem gemeinsamen Servomotor angetrieben.

Die durch den als Zahnriemen ausgebildeten Zuförderer 13 angelieferten Gegenstände 10 werden durch das Zählrad 27 dem Durchlaufspeicher 14 zugeführt. Im Bereich des Zählrads 27 ist als Führungsorgan für die Gegenstände 10 unterhalb des Zählrads 27 ein Führungssegment 28 angeordnet.

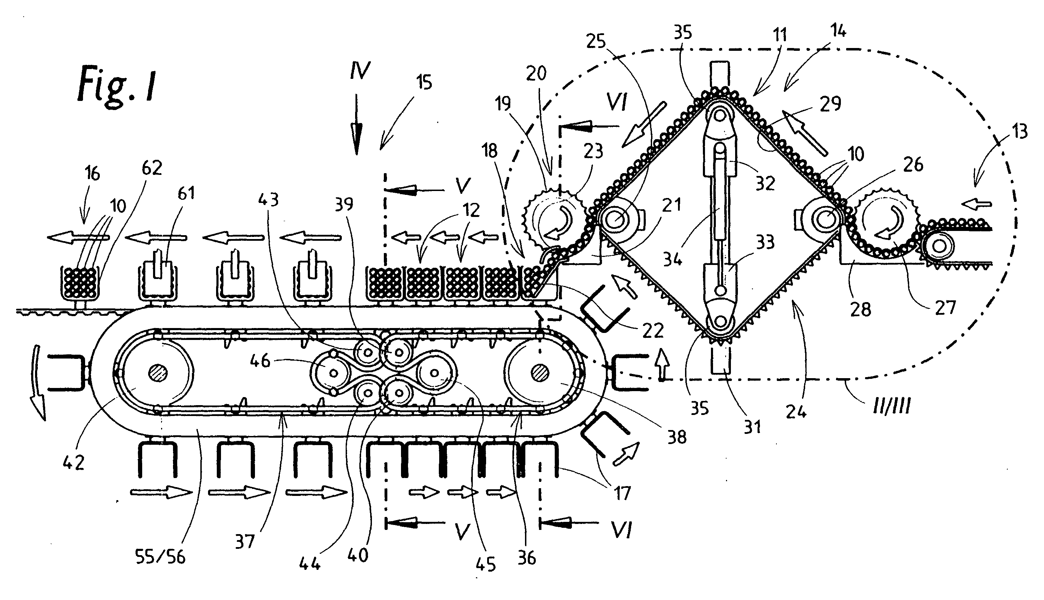

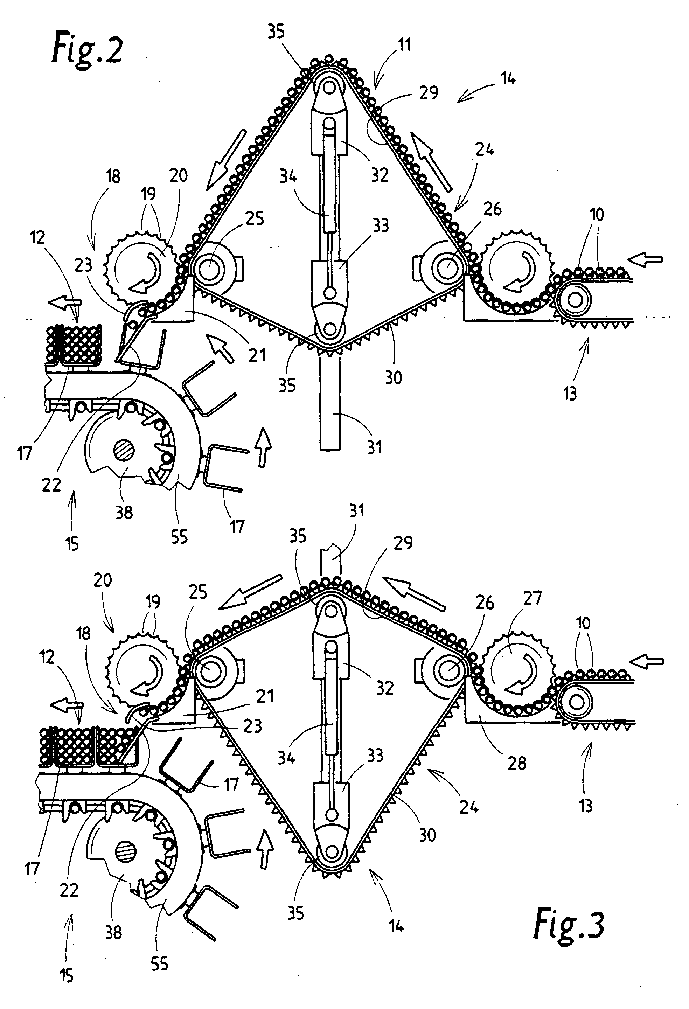

Die Gegenstände 10 werden von dem Zählrad 27 einem oberen Fördertrum 29 des Zahnriemens 24 zugeführt. Der Fördertrum 29 erstreckt sich zwischen den beiden Umlenkrädem 25, 26. Die Kapazitätsveränderung des Durchlaufspeichers 14 wird durch angepasste Längenänderung des Fördertrums 29 bewirkt (Fig. 2, Fig. 3). Die Länge eines unteren Leertrums 30 wird entsprechend verkürzt. Fig. 2 zeigt die Position des Endlosförderers nämlich des Zahnriemens 24, bei maximaler Kapazitätsauslastung. Eine noch leere Tasche 17 gelangt in den Bereich der Füllstation 18. Die Momentaufnahme der Fig. 2 zeigt den Wiederbeginn der Zuführung von Gegenständen 10, wobei die ersten Gegenstände 10 in die Tasche 17 eintreten. Fig. 3 zeigt die Situation bei weitgehend entleertem Durchlaufspeicher 14, nämlich bei geringst möglicher Länge des Fördertrums 29 unmittelbar vor Abschluss des Füllvorgangs einer Tasche 17. Fig. 1 zeigt den Durchlaufspeicher 14 in einer ausgeglichenen Stellung mit gleicher Länge von Fördertrum 29 und Leertrum 30.

Die Veränderung der Kapazität des Durchlaufspeichers 14 wird durch ein verschiebbares, nämlich auf- und abbewegbares Ausgleichsorgan geschaffen. Es handelt sich dabei um ein Spreizelement, bestehend aus zwei in einer gemeinsamen, aufrechten Führung 31 bewegbaren Laufwagen 32, 33 mit einer Kugelumlaufführung. Die beiden Laufwagen 32, 33 werden durch ein Druckorgan, nämlich durch einen Pneumatikzylinder 34 elastisch auf Distanz gehalten. An den Laufwagen 32, 33 sind Umlenkrollen 35 angebracht für den Zahnriemen 24. Die aus den beiden Laufwagen 32, 33 mit Pneumatikzylinder 34 gebildete Einheit ist an der Führung 31 auf- und abbewegbar zur Veränderung der Speicherkapazität.

Eine Besonderheit der gezeigten Vorrichtung ist der Gruppenförderer 15, der eine kontinuierliche Förderung von Organen, nämlich Taschen 17, bei unterschiedlichen Fördergeschwindigkeiten in einzelnen Förder-Abschnitten ermöglicht. Zu diesem Zweck besteht der Gruppenförderer aus zwei Endlosförderem 36, 37. Es handelt sich dabei um Kettenförderer. Die Endlosförderer 36, 37 sind so nebeneinander angeordnet, dass sie eine durchgehende Fördereinheit für die zu fördemden Organe bilden, also für die Taschen 17. Der erste, der Füllstation 18 zugeordnete Endlosförderer 36 wird mit einer niedrigeren Geschwindigkeit kontinuierlich angetrieben. Der andere Endlosförderer 37 ist ebenfalls eigenständig angetrieben, nämlich mit einer höheren (kontinuierlichen) Geschwindigkeit. Die Organe bzw. Taschen 17 sind während des Transports jeweils mit dem einen oder anderen Endlosförderer 36, 37 verbunden, werden aber im Bereich eines oberen Fördertrums ebenso wie im Bereich eines unteren Rücklauftrums in einer Übergabestation 63 von dem einen Endlosförderer an den anderen übergeben.

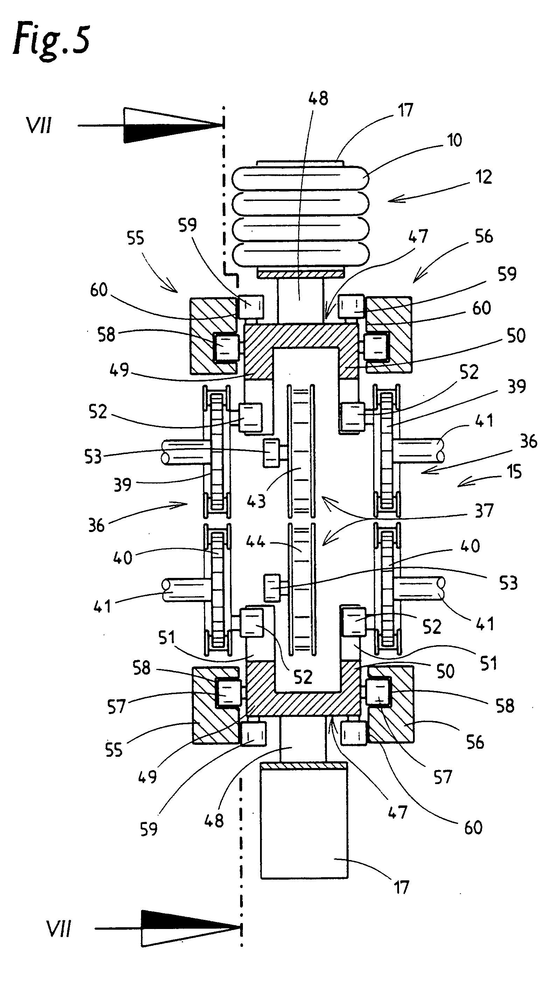

Wie insbesondere aus Fig. 5 ersichtlich, sind die Endlosförderer 36, 37 in versetzten vertikalen Ebenen angeordnet. Um eine ausgewogene Förderung zu gewährleisten, besteht einer der Endlosförderer, hier der erste Endlosförderer 36, aus zwei im Abstand voneinander angeordneten, synchron und parallel laufenden Ketten oder Gurten (Fig. 5). Entsprechend sind zwei im Abstand voneinander angeordnete große Umlenkräder 38 unmittelbar im Bereich der Füllstation 18 angeordnet. Am gegenüberliegenden Ende des jeweiligen Trums des Endlosförderers 36 sind paarweise kleinere Umlenkräder 39, 40 gelagert, und zwar an einseitig anschließenden Achsen 41. Der andere Endlosförderer 37 ist versetzt zu den beiden Einzelförderem des Endlosförderers 36, nämlich etwas mittig zwischen diesen angeordnet. Dieser Endlosförderer 37 besteht lediglich aus einem einzelnen Gurt bzw. einer einzelnen Kette, die gegenüberliegend zum Umlenkrad 38 über ein in gleicher Größe ausgebildetes Umlenkrad 42 läuft. Im Bereich der Übergabestation 63 läuft der Endlosförderer 37 über ein oberes Umlenkrad 43 und ein entsprechendes unteres Umlenkrad 44.

Beide Endlosförderer 36, 37 werden über ein weiteres Rad, nämlich über ein Antriebsrad 45, 46 geleitet.

Die Taschen 17 (oder andere Organe) sind lösbar mit dem einen oder anderen Endlosförderer 36, 37 verbunden. Jede Tasche 17 weist zu diesem Zweck einen Mitnehmer auf, der für den Transport von dem Endlosförderer 36, 37 erfasst wird. In der Übergabestation 63 wird die Tasche 17 von dem einen Endlosförderer gelöst und etwa zeitgleich von dem anschließenden Endlosförderer übemommen.

Bei dem gezeigten Ausführungsbeispiel sind an den Taschen 17 Kupplungsstücke 47 angebracht, nämlich mit diesen über einen Steg 48 verbunden. Die Kupplungsstücke 47 sind U-förmig ausgebildet mit zwei den Endlosförderem 36, 37 zugekehrten Schenkeln 49, 50. Diese stellen eine lösbare Verbindung mit den beiden Einzelketten des Endlosförderers 36 her. Der lediglich aus einer Kette bestehende Endlosförderer 37 tritt nur mit dem Schenkel 49 in Eingriff. Dieser ist zu diesem Zweck mit größerer Breite ausgebildet als der andere Schenkel 50

Das Kupplungsstück 47 bzw. die Schenkel 49, 50 weisen eine zu den Endlosförderem 36, 37 offene Ausnehmung 51 auf, in die an den Endlosförderem 36, 37 angebrachte Mitnehmer 52 bzw. 53 eintreten. Diese weisen Rollen auf, die ein reibungsloses Eintreten in die Ausnehmung 51 und ein Herausführen aus derselben gewährleisten. Die Schenkel 49, 50 sind im Bereich der Ausnehmung 51 so gestaltet, dass in Förderrichtung vomliegend ein längerer bzw. höherer Mitnehmersteg 54 gebildet ist. Dieser erleichtert die Übergabe des Transports von einem Endlosförderer zum anderen. Die Ausnehmung 51 ist an der Eintrittsseite trichterförmig ausgebildet. Die Mitnehmer 52, 53 treten infolge Umlenkung der Endlosförderer 36, 37 in die jeweilige Ausnehmung 51 ein und umgekehrt.

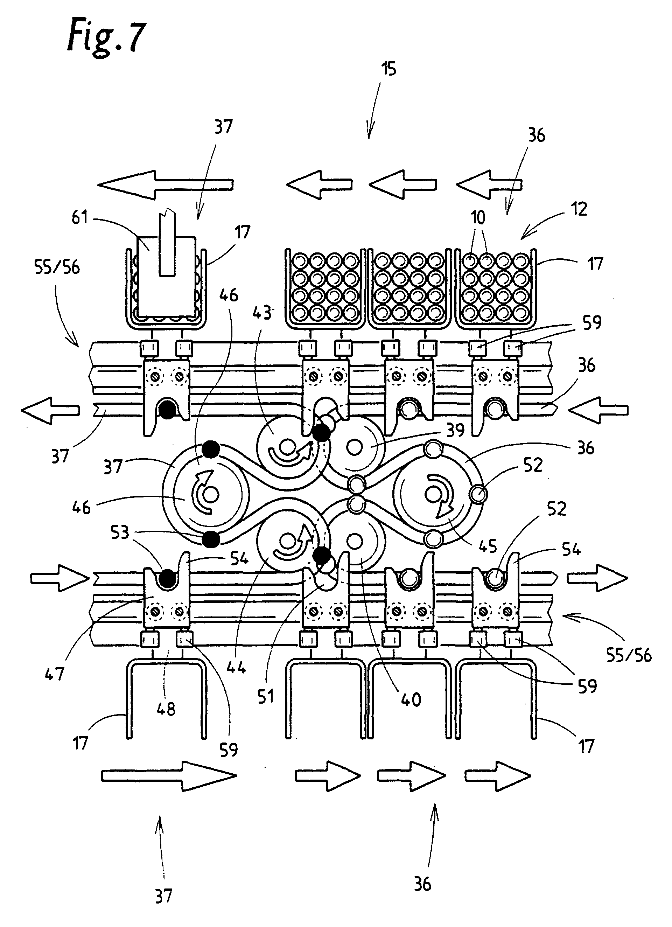

Die Endlosförderer 36, 37 sind relativ zu den Taschen 17 bzw. zu den Kupplungsstücken 47 derselben so angeordnet, dass die (seitlich an den Endlosförderem 36, 37 angebrachten) Mitnehmer 52, 53 während der Förderung einer Tasche 17 exakt in der zugeordneten Ausnehmung 51 ruhen. Die einander zugekehrten Umlenkräder 39 und 40 einerseits sowie 43 und 44 andererseits sind unmittelbar benachbart zueinander gelagert, sodass die Endlosförderer 36, 37 im Bereich eines Teilstücks der Umlenkung in der Übergabestation 63 nebeneinander liegen. Hier wird ein Organ, nämlich eine Tasche 17, von einem Endlosförderer 36 an den anderen Endlosförderer 37 übergeben. Die Mitnehmer 52, 53 sind in abgestimmter Relativstellung angeordnet. Wie insbesondere aus Fig. 7 ersichtlich, tritt der Mitnehmer 52 des zufördernden Endlosförderers 36 aus der Ausnehmung 51 heraus, während etwa gleichzeitig der Mitnehmer 53 des nachfolgenden Endlosförderers 37 in die Ausnehmung 51 eintritt. Dabei wird als erstes der längere Mitnehmersteg 54 erfasst, sodass in diesem Übergabebereich eine kontinuierliche, ununterbrochene Förderung der Taschen 17 gewährleistet ist. Im Bereich des Endlosförderers 37 werden die Taschen 17 mit höherer Geschwindigkeit bewegt. Im Bereich der Rücklauftrüme erfolgt die Übergabe in gleicher bzw. analoger Weise.

Da die Taschen 17 lediglich über Mitnehmer 52, 53 durch die Endlosförderer 36, 37 fasst werden, bedarf es einer separaten Führung der Taschen 17.

Zu diesem Zweck sind ringsherum laufende, geschlossene Führungsschienen 55, 56 zu beiden Seiten der Endlosförderer 36, 37 feststehend angeordnet. Die Taschen 17 bzw. deren Kupplungstücke 47 sind mit Rollen an bzw. in den Führungsschienen 55, 56 abgestützt. Bei dem vorliegenden Beispiel sind seitwärtsgerichtete Führungsrollen 57 mit horizontalen Drehachsen an beiden Seiten des Kupplungsstücks 47 angebracht. Die Führungsrollen 57 treten in eine Führungsnut 58 der Führungsschiene 55, 56 ein. Darüber hinaus sind an dem Kupplungsstück 47 nach unten bzw. oben gerichtete Stützrollen 59 angebracht. Diese um vertikale Achsen drehenden Stützrollen 59 liegen an seitlichen Führungsflächen 60 der Führungsschienen 55, 56 an.

Die durch den zweiten Endlosförderer 37 transportierten Gruppen 12 werden während des Transports durch Querabschub, nämlich durch jeder Tasche 17 zugeordnete Schieber 61 seitwärts aus den Taschen 17 aus- und in synchron laufende Gruppentaschen 62 des Zwischenförderers 16 eingeschoben. Diese Gruppentaschen 62 sind so ausgebildet, dass die Gegenstände 10 mit voller Länge innerhalb der Gruppentasche liegen.

### Bezugszeichenliste:

- 10: Gegenstand
- 11: Dichtreihe
- 12: Gruppe
- 13: Zuförderer
- 14: Durchlaufspeicher
- 15: Gruppenförderer
- 16: Zwischenförderer
- 17: Tasche
- 18: Füllstation
- 19: Mulden
- 20: Zahlrad
- 21: Führungssegment
- 22: Leitsteg
- 23: Führungsbügel
- 24: Zahnriemen
- 25: Umlenkrad
- 26: Umlenkrad
- 27: Zählrad
- 28: Führungssegment
- 29: Fördertrum
- 30: Leertrum
- 31: Führung
- 32: Laufwagen
- 33: Laufwagen
- 34: Pneumatikzylinder
- 35: Umlenkrolle
- 36: Endlosförderer
- 37: Endlosförderer
- 38: Umlenkrad
- 39: Umlenkrad
- 40: Umlenkrad
- 41: Achse
- 42: Umlenkrad
- 43: Umlenkrad
- 44: Umlenkrad
- 45: Antriebsrad
- 46: Antriebsrad
- 47: Kupplungsstück
- 48: Steg
- 49: Schenkel
- 50: Schenkel
- 51: Ausnehmung
- 52: Mitnehmer
- 53: Mitnehmer
- 54: Mitnehmersteg
- 55: Führungsschiene
- 56: Führungsschiene
- 57: Führungsrolle
- 58: Führungsnut
- 59: Stützrolle
- 60: Führungsfläche
- 61: Schieber
- 62: Gruppentasche
- 63: Übergabestation

## Patentansprüche

1. Vorrichtung zum Handhaben von länglichen, insbesondere zylindrischen Gegenständen (10), vorzugsweise zur Bildung von Gruppen (12) aus Gegenständen (10) als Inhalt einer zu befüllenden Packung, mit einem Gruppenförderer (15), der Taschen (17) zur Aufnahme der Gruppen (12) aufweist, wobei die Gegenstände (10) durch einen Zuförderer (13) einer Füllstation (18) zuführbar sind, in deren Bereich die Taschen (17) des Gruppenförderers (15) je zur Aufnahme einer Gruppe (12) entsprechenden Anzahl von Gegenständen (10) bereitgehalten sind, und wobei die Taschen (17) während der Einführung der Gegenstände (10) in die Taschen (17) kontinuierlich weiterbewegbar sind, **gekennzeichnet durch** folgende Merkmale:
a) der Gruppenförderer (15) weist zwei mit unterschiedlichen Fördergeschwindigkeiten umlaufende, eigenständige Teilförderer, nämlich Endlosförderer (36, 37) auf, wobei der zweite Endlosförderer (37) an den ersten Endlosförderer (36) anschließt,
b) die Taschen (17) sind lösbar mit dem ersten oder zweiten Endlosförderer (36, 37) verbunden,
c) in einer Übergabestation (63) des Gruppenförderers (15) sind die Taschen (17) von dem ersten Endlosförderer (36) lösbar und an den anschließenden zweiten Endlosförderer (37) übertragbar.

2. Vorrichtung nach Anspruch 1, **dadurch gekennzeichnet, dass** die Taschen (17) im Bereich der Übergabestation (63) auch von dem zweiten Endlosförderer (37) wieder an den ersten Endlosförderer (36) übergebbar sind, nämlich im Bereich eines Rücklauftrums.

3. Vorrichtung nach Anspruch 1 oder 2, **dadurch gekennzeichnet, dass** die Taschen (17) durch an jedem der Endlosförderer (36, 37) angeordnete Mitnehmer (52, 53) erfassbar und transportierbar sind, wobei im Bereich der Übergabestation (63) Mitnehmer des einen Endlosförderers außer Eingriff mit der jeweiligen Tasche (17) und Mitnehmer des anderen Endlosförderers in Eingriff mit der betreffenden Tasche (17) treten.

4. Vorrichtung nach Anspruch 1 oder einem der weiteren Ansprüche, **dadurch gekennzeichnet, dass** die beiden Endlosförderer (36, 37) in versetzten vertikalen Ebenen umlaufen, wobei im Bereich der Übergabe der Taschen (17) von dem einen Endlosförderer zum anderen eine versetzte Überdeckung der Endlosförderer (36, 37) gegeben ist.

5. Vorrichtung nach Anspruch 1 oder einem der weiteren Ansprüche, **dadurch gekennzeichnet, dass** die Taschen (17) unabhängig von dem Gruppenförderer (15) bzw. den Endlosförderern (36, 37) geführt sind, insbesondere mit Hilfe von Führungsrollen (57) sowie Stützrollen (59) an feststehenden Führungsschienen (55, 56) zu beiden Seiten des Gruppenförderers (15) bzw. der Endlosförderer (36, 37).

6. Vorrichtung nach Anspruch 1 oder einem der weiteren Ansprüche, **dadurch gekennzeichnet, dass** die einzeln ankommenden Gegenstände (10) in queraxialer Richtung nacheinander in die oben offenen, insbesondere becherförmigen Taschen (17) des Gruppenförderers (15) einfüllbar sind, und dass der Inhalt der Taschen (17) durch quergerichtete Ausschubbewegung aus der an mindestens einer Seite offenen Tasche (17) ausschiebbar und in die ebenfalls seitlich offene Packung oder in eine Gruppentasche (62) eines Zwischenförderers (16) einschiebbar ist.

7. Vorrichtung nach Anspruch 1 oder einem der weiteren Ansprüche, **dadurch gekennzeichnet, dass** die Gegenstände (10) in einer Dichtreihe (11) aufeinanderfolgend durch einen Zuförderer (13) in queraxialer Richtung der Füllstation (18) zuführbar sind, in deren Bereich eine Tasche (17) des Gruppenförderers (15) zur Aufnahme einer der Gruppe (12) entsprechenden Anzahl von Gegenständen (10) bereitgehalten ist, und dass die Tasche (17) während der Einführung der Gegenstände (10) von oben her in die offene Tasche kontinuierlich weiterbewegbar ist, derart, dass die Tasche (17) nach und nach mit einzelnen zugeführten Gegenständen (10) befüllbar ist.

8. Vorrichtung nach Anspruch 7, **dadurch gekennzeichnet, dass** im Bereich der Füllstation (18) Leitorgane positioniert sind für eine geordnete Einführung der Gegenstände (10) in die jeweils zu befüllende Tasche (17), wobei ein schräggerichteter Leitsteg (22) auf Grund fortgesetzter Relativbewegung der Tasche (17) eine Befüllung derselben zunehmend von einer Seitenwand der Tasche (17) zur anderen bewirkt.

9. Vorrichtung nach Anspruch 8, **dadurch gekennzeichnet, dass** der Leitsteg (22) im Anschluss an die Dichtreihe (11) der Gegenstände (10) angeordnet ist, vorzugsweise in der Ausführung mit zwei im Abstand voneinander angeordneten, parallelen Leitstegen (22) zu beiden Seiten der mit geringerer Breite als die Länge der Gegenstände (10) ausgebildeten Taschen (17), derart, dass die Gegenstände (10) bei der Einführung in die Tasche (17) durch die Leitstege (22) an Endbereichen abgestützt sind.

10. Vorrichtung nach Anspruch 7 oder einem der weiteren Ansprüche, **dadurch gekennzeichnet, dass** im Bereich der Füllstation (18) ein Sortierorgan für die Gegenstände (10) angeordnet ist, insbesondere ein Zählrad (27) mit am Umfang angeordneten Mulden zur Aufnahme jeweils eines Gegenstands (10), wobei diese durch das Zählrad (27) der zu befüllenden Tasche (17) bzw. dem Leitsteg (22) zuführbar sind.

11. Vorrichtung nach Anspruch 7 oder einem der weiteren Ansprüche, **dadurch gekennzeichnet, dass** die Dichtreihe (11) der Gegenstände (10) durch einen Durchlaufspeicher (14) hindurchförderbar ist zum Ausgleich von Förderschwankungen der Gegenstände (10), insbesondere bei der Zuführung einer ungefüllten Tasche (17) zur Füllstation (18) und während eines zeitweiligen Stillstands des Zählrads (20).

12. Vorrichtung nach Anspruch 11, **dadurch gekennzeichnet, dass** der Durchlaufspeicher (14) aus einem Endlosförderer besteht, insbesondere einem Zahnriemen (24) zur Aufnahme der Gegenstände (10) in Dichtreihe (11), wobei die wirksame Länge eines die Gegenstände (10) aufnehmenden Fördertrums (29) einerseits und eines Leertrums (30) andererseits veränderbar ist entsprechend der Speicherkapazität des Durchlaufspeichers (14).

## Claims

1. Apparatus for handling elongate, in particular cylindrical articles (10), preferably for forming groups (12) of articles (10) as the contents of a pack which is to be filled, having a group conveyor (15) which has pockets (17) for accommodating the groups (12), it being possible for the articles (10) to be fed, by a feed conveyor (13), to a filling station (18), in the region of which the pockets (17) of the group conveyor (15) are held ready in each case for accommodating a number of articles (10) which corresponds to the group (12), and it being possible for the pockets (17) to be moved on continuously as the articles (10) are introduced into the pockets (17), **characterized by** the following features:
a) the group conveyor (15) has two independent sub-conveyors, namely endless conveyors (36, 37), circulating at different conveying speeds, the second endless conveyor (37) adjoining the first endless conveyor (36),
b) the pockets (17) are connected in a releasable manner to the first or second endless conveyor (36, 37),
c) in a transfer station (63) of the group conveyor (15), the pockets (17) can be released from the first endless conveyor (36) and transferred to the adjoining second endless conveyor (37).

2. Apparatus according to Claim 1, **characterized in that** the pockets (17) can also be transferred back to the first endless conveyor (36) from the second endless conveyor (37) in the region of the transfer station (63) namely in the region of a return strand.

3. Apparatus according to Claim 1 or 2, **characterized in that** the pockets (17) can be gripped and transported by carry-along elements (52, 53) arranged on each of the endless conveyors (36, 37), it being the case, in the region of the transfer station (63), carry-along elements of one endless conveyor are disengaged from the respective pocket (17) and carry-along elements of the other endless conveyor are engaged with the relevant pocket (17).

4. Apparatus according to Claim 1 or one of the further claims, **characterized in that** the two endless conveyors (36, 37) circulate in offset vertical planes, offset overlapping of the endless conveyors (36, 37) being provided in the region where the pockets (17) are transferred from one endless conveyor to the other.

5. Apparatus according to Claim 1 or one of the further claims, **characterized in that** the pockets (17) are guided independently of the group conveyor (15) or the endless conveyors (36, 37), in particular with the aid of guide rollers (57) and supporting rollers (59) on fixed guide rails (55, 56) on both sides of the group conveyor (15) or of the endless conveyors (36, 37).

6. Apparatus according to Claim 1 or one of the further claims, **characterized in that** the individually arriving articles (10) can be introduced one after the other, in a direction transverse to their axis, into the in particular cup-like pockets (17) of the group conveyor (15), these pockets being open at the top, and **in that** the contents of the pockets (17) can be pushed out of the pocket (17), which is open on at least one side, by a transversely directed pushing-out movement and ihto the likewise laterally open pack or into a group pocket (62) of an intermediate conveyor (16).

7. Apparatus according to Claim 1 or one of the further claims, **characterized in that** the articles (10) can be fed one after the other in a closely packed row (11), in a direction transverse to their axis, by a feed conveyor (13) to the filling station (18), in the region of which a pocket (17) of the group conveyor (15) is held ready for accommodating a number of articles (10) which correspond to the group (12), and **in that** the pocket (17) can be moved on continuously as the articles (10) are introduced into the open pocket from above, such that the pocket (17) can be filled gradually with individually fed articles (10).

8. Apparatus according to Claim 7, **characterized in that** directing elements for an ordered introduction of the articles (10) into the pocket (17) which is to be filled in each case are positioned in the region of the filling station (18), an obliquely oriented directing crosspiece (22) causing the pocket (17), on account of continued relative movement of the latter, to be filled increasingly from one side wall of the pocket (17) to the other.

9. Apparatus according to Claim 8, **characterized in that** the directing crosspiece (22) is arranged to follow the closely packed row (11) of articles (10), preferably, in the configuration with two spaced-apart, parallel directing crosspieces (22), on both sides of the pockets (17), which are designed with a width which is smaller than the length of the articles (10), such that, when introduced into the pocket (17), the articles (10) are supported at end regions by the directing crosspieces (22).

10. Apparatus according to Claim 7 or one of the further claims, **characterized in that** arranged in the region of the filling station (18) is a sorting element for the articles (10), in particular a counting wheel (27) with circumferentially arranged hollows for accommodating in each case one article (10), it being possible for the articles to be fed by the counting wheel (27) to the pocket (17) which is to be filled and/or to the directing crosspiece (22).

11. Apparatus according to Claim 7 or one of the further claims, **characterized in that** the closely packed row (11) of articles (10) can be conveyed through a continuous-flow store (14) in order to compensate for conveying fluctuations of the articles (10), in particular when a pocket (17) which has not been filled is fed to the filling station (18) and during a temporary standstill of the counting wheel (20).

12. Apparatus according to Claim 11, **characterized in that** the continuous-flow store (14) comprises an endless conveyor, in particular a toothed belt (24) for accommodating the articles (10) in the closely packed row (11), it being possible for the effective length, on the one hand, of a conveying strand (29) accommodating the articles (10) and, on the other hand, of a return strand (30) to be changed in accordance with the storage capacity of the continuous-flow store (14).

## Revendications

1. Dispositif de manipulation d'objets allongés en particulier cylindriques (10), de préférence pour la formation de groupes (12) d'objets (10) comme contenu d'un paquet à remplir, comprenant un transporteur de groupes (15) qui présente des poches (17) destinées à recevoir les groupes (12), les objets (10) étant amenés par un transporteur d'amenée (13) à un poste de remplissage (18) dans la zone duquel, les poches (17) du transporteur de groupes (15) sont présentées chacune pour recevoir un nombre d'objets (10) correspondant à un groupe (12), et les poches (17) étant avancées de façon continue pendant l'introduction des objets (10) dans les poches (17), **caractérisé par** les caractéristiques suivantes :
a) le transporteur de groupes (15) présente deux transporteurs partiels indépendants différents tournant à des vitesses de transport différentes, à savoir des transporteurs sans fin (36, 37), le deuxième transporteur sans fin (37) faisant suite au premier transporteur sans fin (36),
b) les poches (17) sont jointes de manière détachable au premier ou au deuxième transporteur sans fin (36, 37),
c) à un poste de transfert (63) du transporteur de groupes (15), les poches (17) peuvent être transférées de manière détachable du premier transporteur sans fin (36) au deuxième transporteur sans fin qui suit (37).

2. Dispositif selon la revendication 1, **caractérisé par le fait que** dans la zone du poste de transfert (63), les poches (17) peuvent aussi être retransférées du deuxième transporteur sans fin (37) au premier transporteur sans fin (36), ce dans la zone d'un brin de retour.

3. Dispositif selon l'une des revendications 1 et 2, **caractérisé par le fait que** les poches (17) sont saisies et transportées par des entraîneurs (52, 53) situés sur chacun des transporteurs sans fin (36, 37), et dans la zone du poste de transfert (63), des entraîneurs d'un transporteur sans fin se dégagent de la poche (17) correspondante et des entraîneurs de l'autre transporteur sans fin viennent en prise avec ladite poche (17).

4. Dispositif selon la revendication 1 ou une des autres revendications, **caractérisé par le fait que** les deux transporteurs sans fin (36, 37) tournent dans des plans verticaux décalés, et dans la zone de transfert des poches (17) d'un transporteur sans fin à l'autre, il existe un recouvrement décalé des transporteurs sans fin (36, 37).

5. Dispositif selon la revendication 1 ou une des autres revendications, **caractérisé par le fait que** les poches (17) sont guidées indépendamment du transporteur de groupes (15) ou des transporteurs sans fin (36, 37), en particulier au moyen de galets de guidage (57) et de galets d'appui (59) sur des rails fixes de guidage (55, 56) de part et d'autre du transporteur de groupes (15) ou des transporteurs sans fin (36, 37).

6. Dispositif selon la revendication 1 ou une des autres revendications, **caractérisé par le fait que** les objets (10), qui arrivent un par un, sont introduits l'un après l'autre en direction perpendiculaire à l'axe dans les poches (17), ouvertes en haut et en particulier en forme de godet, du transporteur de groupes (15), et que le contenu des poches (17) est expulsé des poches (17) ouvertes sur au moins un côté par un mouvement d'expulsion dirigé transversalement et est introduit dans le paquet également ouvert d'un côté ou dans une poche à groupe (62) d'un transporteur intermédiaire (16).

7. Dispositif selon la revendication 1 ou une des autres revendications, **caractérisé par le fait que** les objets (10) sont amenés en une file serrée (11) par un transporteur d'amenée (13) en direction perpendiculaire à l'axe au poste de remplissage (18), dans la zone duquel une poche (17) du transporteur de groupes (15) est présentée pour recevoir un nombre d'objets (10) correspondant au groupe (12), et que pendant l'introduction des objets (10) d'en haut dans la poche (10) ouverte, celle-ci est avancée de façon continue de façon à pouvoir être remplie petit à petit d'objets (10) amenés un par un.

8. Dispositif selon la revendication 7, **caractérisé par le fait que** dans la zone du poste de remplissage (18) sont placés des organes directeurs pour une introduction ordonnée des objets (10) dans la poche (17) à remplir, une barre directrice dirigée obliquement (22) produisant, en raison du mouvement relatif poursuivi de la poche (17), un remplissage de celle-ci croissant d'une paroi latérale de la poche (17) à l'autre.

9. Dispositif selon la revendication 8, **caractérisé par le fait que** la barre directrice (22) est placée après la file serrée (11) d'objets (10), de préférence dans une réalisation avec deux barres directrices (22) parallèles espacées placées de part et d'autre des poches (17), de largeur inférieure à la longueur des objets (10), de façon telle que les objets (10), lors de leur introduction dans la poche (17), soient supportés dans leurs parties d'extrémité par les barres directrices (22).

10. Dispositif selon la revendication 7 ou une des autres revendications, **caractérisé par le fait que** dans la zone du poste de remplissage (18) est placé un organe de triage des objets (10), en particulier une roue de comptage (27) ayant sur son pourtour des auges destinées à recevoir chacune un objet (10), la roue de comptage (27) amenant les objets à la poche (17) à remplir ou à la barre directrice (22).

11. Dispositif selon la revendication 7 ou une des autres revendications, **caractérisé par le fait que** la file serrée (11) d'objets (10) traverse un magasin de passage (14) pour la compensation des fluctuations de transport des objets (10), en particulier lors de l'amenée au poste de remplissage (18) d'une poche (17) non remplie et pendant un arrêt temporaire de la roue de comptage (20).

12. Dispositif selon la revendication 11, **caractérisé par le fait que** le magasin de passage (14) est constitué d'un transporteur sans fin, en particulier d'une courroie dentée (24) destinée à recevoir les objets (10) en file serrée (11), la longueur active d'une part d'un brin transporteur (29) recevant les objets (10) et d'autre part d'un brin vide (30) pouvant être modifiée en fonction de la capacité du magasin de passage (14).
